# EUROPÄISCHE PATENTSCHRIFT

(11) **EP 2 334 437 B1**
(45) Veröffentlichungstag und Bekanntmachung des Hinweises auf die Patenterteilung: **18.03.2015**
(21) Anmeldenummer: 09768492.2
(22) Anmeldetag: 02.10.2009
(51) Int. Cl.: B03B 9/00, B03B 5/02

(54) **SCHÜTTGUTREINIGUNGSANLAGE**
BULK GOODS CLEANING SYSTEM
INSTALLATION DE LAVAGE DE PRODUIT EN VRAC

(30) Priorität: 17.10.2008 DE 202008013646 U
(43) Veröffentlichungstag der Anmeldung: 22.06.2011
(73) Patentinhaber: Doppstadt, Ferdinand, 42555 Velbert (DE)
(72) Erfinder: Doppstadt, Ferdinand, 42555 Velbert (DE)
(74) Vertreter: Willems, Volker
(86) Internationale Anmeldenummer: PCT/DE2009/075056
(87) Internationale Veröffentlichungsnummer: WO 2010/043221

(56) Entgegenhaltungen:
- EP-A1- 0 613 722
- DE-A1- 4 140 845
- DE-A1- 19 621 892
- DE-A1- 19 810 866
- DE-C1- 19 907 513
- US-A1- 2004 082 828
- DETZNER D ET AL: "METHA - ERSTE GROSSANLAGE ZUR AUFBEREITUNG VON HAFENSEDIMENTEN" AUFBEREITUNGS TECHNIK, VERLAG FUER AUFBEREITUNG, WIESBADEN, DE, Bd. 34, Nr. 5, 1. Mai 1993 (1993-05-01), Seiten 235-242, XP000351982 ISSN: 0004-783X

## Beschreibung

### Technisches Gebiet

Die Erfindung betrifft eine Anordnung zur Reinigung von verschmutztem Schüttgut enthaltend:
a) Eine Aufnahme- und Fördereinrichtung zum Aufnehmen und zum Fördern des verschmutzten Schüttguts innerhalb der Anordnung,
b) eine mechanische Trenneinheit zur mechanischen Trennung des Schüttguts mit einer Zufuhr- und Mischvorrichtung zur Zuführung und Durchmischung von Stützkörnern und Wasser zu dem verschmutzten Schüttgut,
c) eine Siebvorrichtung mit einem Schwingsieb zum Abscheiden grobkörniger Bestandteile, insbesondere der Stützkörner,
d) eine Zentrifuge zum Abscheiden von Verunreinigungen vom Schüttgut,
e) einen Aufströmklassierer zum Aufströmen von gelösten Schwebestoffen aus dem Schüttgut,
f) Entwässerungsmittel zur Trennung des gesäuberten Schüttguts und des darin enthaltenen Wassers.

### Stand der Technik

Schüttgut, insbesondere Sand, Granulat oder Kies, wird häufig als Filtermaterial, wie beispielsweise in Kläranlagen, eingesetzt. Durch die Filterung wird das Schüttgut verunreinigt. Auch beim Straßenbau oder in der Ölindustrie wird Schüttgut verwendet, welches auf unterschiedlichste Weise verschmutzt ist. Unter verunreinigte Materialien, für die vorliegende Erfindung Anwendung findet, fallen auch Ölschlämme. Der Schmutz beziehungsweise die Verunreinigung lassen sich häufig nur sehr schwer unter Einsatz von Chemikalien von dem Schüttgut trennen. Dies verursacht hohe Kosten bei der Reinigung. Alternativ wird das verunreinigte Schüttgut überhaupt nicht mehr verwendet und nur noch endgelagert.

Es sind verschiedene Anordnungen zur Reinigung von verschmutztem Schüttgut oder vergleichbarem Gut bekannt.

So beschreibt die deutsche Patentschrift DE 40 34 227 C2 ein Verfahren zum Aufbereiten von Ablagerungen, insbesondere von Sedimenten, insbesondere von Sedimenten bei der Gewässerausbaggerung, von Abraummaterial oder dergleichen, bei dem das zu behandelnde Material in aufeinander folgenden Stufen klassiert und von Schadstoffen gereinigt wird. Die gewonnenen Sedimente kommen dabei auf ein Sieb mit hochfrequenter Schwingung. Das passierte Gut wird einem Schwertwäscher zugeführt und gelangt danach in einen Siebzyklon, der mit einer Waschtrommel, sowie einem Schwingklassierer eine erste Trennstufe bildet. In einer zweiten Trennstufe werden organische und anorganische Bestandteile einer Zyklonanlage zugeführt, die die Abscheidung des Sandes durch einen Schwertrübsortierer über einen Schwingentwässerer einem Sandlager zuführt.

Die deutsche Gebrauchsmusterschrift DE 298 24 791 U1 offenbart ferner eine Anordnung zur Sandtrennung durch Dichtegradienten. Durch das Sandgemisch wird feinblasige Luft geperlt. Dieses Sandlager kann die Aufgabe eines vorgeschalteten Sandseparators mit übernehmen.

Die EP 0 613 722 A1 beschreibt ein Verfahren und eine Vorrichtung zur Trennung von Wasser und Feststoffen, insbesondere zur Gewinnung von wiederverwendbarem Sand. Dabei wird der verunreinigte Sand in einen Vorlagensumpf eingebracht und nach Zufuhr von Wasser mittels einer Fördereinrichtung in eine Siebeinrichtung überführt und dadurch von großen Festkörpern getrennt. Das verbleibende Wasser-Feststoff-Gemisch wird über eine zweite Fördereinrichtung einem Hydrozyklon und anschließend einem Wirbelsichtsortierer zugeführt. Mittels einer Entwässerungsvorrichtung erfolgt die restliche Trennung des Sandes vom Wasser.

Die DE 198 10 866 A1 beschreibt eine Anlage zur Aufbereitung eines Feinstoffgemisches mit mineralischen, organischen und wässrigen Anteilen unter Nutzung einer Demineralisierung. Kern der Anlage ist ein Drehteller mit einer auf das Zentrum des Drehtellers gerichteten Zuführung für das Feinstoffgemisch. Das Feinstoffgemisch wird durch die Rotation des Drehtellers abgeschleudert und in einer Sammeleinrichtung aufgefangen. Weitere Aufbereitungen der eingesammelten Flüssigkeiten und Schlämme schließen sich der Demineralisierung an.

Die Veröffentlichung D. Detzner et al, "METHA - Erste Großanlage zur Aufbereitung von Hafensedimenten", Aufbereitungs-Technik, Bd. 34, Nr. 5, Mai 1993, Verlag für Aufbereitung, Wiesbaden beschäftigt sich mit der Aufbereitung des Sediments im Fließgewässer. Die Trennung des verunreinigten Schlicks von Sand und anderen Bestandteilen erfolgt in drei Schritten: Eine Vortrennung durch rotierende Trommelsiebe bewirkt eine Grobabtrennung von Fremdstoffen. Zur weiteren Reinigung wird das Stoffgemisch anschließend durch Hydroklassierung aufbereitet. Ein Aufstromsortierer trennt anschließend die Schadstoffe von Sand. Eine Entwässerung des Sandes erfolgt über Entwässerungssiebe.

Die Patentschrift DE 199 07 513 C1 offenbart ein Verfahren zur Reinigung verunreinigter körniger Stoffe durch Attrition, d.h. durch Rühren in einer Wasseraufschlämmung.

Die DE 41 40 845 1 beschreibt ein Verfahren und eine Vorrichtung zum Entfernen von Verunreinigungen aus kontaminierten Böden. Durch ein Hochdruckwasserstrahlrohr wird der kontaminierte Boden aufgeschlossen und anschließend in einer Klassierungseinrichtung in einzelne Kornfraktionen weiter aufbereitet. Die abschließende Reinigung erfolgt in einer Flotationseinrichtung zum Trennen der flüssigen von den festen Bestandteilen.

Die Offenlegungsschrift DE 196 21 892 A1 offenbart eine Vorrichtung zur In -Situ-Reinigung von Sanden, beispielsweise von Sandkästen, Sanden von Stränden, etc. Der Sand wird vor Ort durch einen Waschvorgang und anschließender Klassierung gereinigt. Die Reinigungsanlage besteht aus mehreren auf eine mobile Einheit monierte Anlagenkomponente.

Die US 2004 0082 828 A1 beschreibt eine Verfahren zum Dekontaminieren von Erdreich, das anorganische Verunreinigungen enthält. In einem ersten Schritt werden mittels einer Schüttelrutsche die anorganischen Verunreinigungen, die in Partikelform in einem Grobanteil enthalten sind, herausgelöst. In einem weiteren Schritt werden mittels einer Wendelrutsche die anorganischen Verunreinigungen, die in Partikelform in einem Zwischenanteil enthalten sind, entfernt. Abschließend werden mittels eines Mehrfach-Schwerkraftseparators die anorganischen Verunreinigungen in Partikelform, die in einem Feinanteil enthalten sind, separiert. Durch diese Methode werden die anorganischen Verunreinigungen in den Grob-, Zwischen- und Feinanteilen weitestgehend eliminiert.

Nachteil der bekannten Anordnungen zur Reinigung von verschmutztem Sand ist, dass das Ergebnis häufig nicht ausreichend gut ist. Es haften oft noch Verschmutzungsreste an dem Sand an. Solche Verschmutzungen lassen sich derzeit bestenfalls mit Chemikalien, wie Lösungsmittel, von dem Sand lösen. Die Verwendung von Chemikalien ist jedoch nicht nur kostenintensiv, sondern kann auch die Umwelt beeinträchtigen.

### Offenbarung der Erfindung

Aufgabe der Erfindung ist es daher, die oben genannten und andere bestehende Nachteile des Standes der Technik zu vermeiden und eine umweltfreundliche Vorrichtung zu schaffen, die die Reinigung auch von sehr stark verschmutztem Schüttgut ermöglicht.

Erfindungsgemäß wird die Aufgabe dadurch gelöst, dass die Anordnung zur Reinigung von verschmutztem Schüttgut der eingangs genannten Art folgende Komponenten enthält:
g) einen ersten Wasserhochdruckgenerator, welcher das Wasser mit Hochdruck in die Zufuhr- und Mischvorrichtung führt und
h) einen zweiten Wasserhochdruckgenerator für die Siebvorrichtung, welcher das verschmutzte Schüttgut auf dem Schwingsieb mit Wasser unter Hochdruck bestrahlt.

Die Erfindung beruht auf einem Prinzip, welches allein auf mechanische Reinigungsstufen setzt, die im Gegensatz zur Verwendung von Chemikalien umweltfreundlich sind. Diese mechanischen Komponenten werden so angeordnet und kombiniert, dass das Ergebnis der Reinigung optimal ausfällt, ohne die Umwelt übermäßig zu belasten. Die Anordnung besteht aus mehreren Bearbeitungsstufen. Über Förderbänder wird das jeweilige Gut von Bearbeitungsstufe zu Bearbeitungsstufe transportiert.

In einer ersten Bearbeitungsstufe wird in die Zufuhr- und Mischvorrichtung dem verunreinigten Schüttgut Stützkörner mit Wasser hinzugefügt. Durch das beigemengte Stützkorn werden die Verunreinigungen in kleine Bestandteile zerrieben, zerschossen oder aufgelöst.

In einer zweiten Bearbeitungsstufe wird das Schüttgut-, Stützkörner und Wassergemisch auf ein Schwingsieb befördert. Hier werden die Stützkörner aus dem Gemisch heraus gesiebt und wieder in die in die Zufuhr- und Mischvorrichtung zurückgeführt. Übergrößen oder größere Störstoffe können hier ebenfalls ausgesiebt und beispielsweise über ein Förderband ausgetragen und dem weiteren Waschprozess somit entzogen werden.

In einer dritten Bearbeitungsstufe wird das nun vorliegende Gemisch aus der zweiten Bearbeitungsstufe einer Zentrifuge zugeführt. Die Zentrifuge trennt einen großen Teil des Schüttgutes von Wasser und Verunreinigungen aufgrund ihrer unterschiedlichen Dichte. Das getrennte Wasser mit den darin gelösten Verunreinigungen wird beispielsweise in einen Zwischenbehälter geleitet.

In einer vierten Bearbeitungsstufe fällt das Schüttgut mit den Resten an Verunreinigung in einen unter der Zentrifuge aufgestellten Aufströmklassierer. Der Aufströmklassierer trennt durch sein Funktionsprinzip Schüttgut von Schwebestoffen. Die Schwebestoffe werden hierbei durch Wasser ausgespült und ebenfalls in den zwischen Behälter geleitet.

Das ausgespülte Schüttgut aus dem Aufströmklassierer wird in einer fünften Bearbeitungsstufe auf einen Schwingentwässerer gegeben. Dieser entwässert das Schüttgut so, dass das Schüttgut über ein Förderband von der Anordnung abgezogen und auf eine Halde gefördert werden kann. Wasser welches bei diesem Vorgang separiert wird fließt ebenfalls in den Zwischenbehälter.

Praktisch alle Stoffe die dem Reinigungsvorgang dieser Anordnung zugesetzt werden, werden separiert und lassen sich, mit Ausnahme der Verunreinigung, erneut dem Prozess zuführen. Die Anordnung dient daher einer besonders umweltschonenden Reinigung von verschmutztem Schüttgut.

Als vorteilhafte Ausgestaltung der Neuerung hat sich erwiesen, wenn eine solche Anordnung zur Reinigung von verschmutztem Schüttgut einen ersten Wasserhochdruckgenerator aufweist. Dieser Wasserhochdruckgenerator führt das Wassers mit Hochdruck in die Zufuhr- und Mischvorrichtung. Durch diese Maßnahme wird das Lösen der Verunreinigung vom Schüttgut durch die Wasserstrahlkräfte und die umher wirbelnden Stützkörner erheblich verbessert.

Eine weitere vorteilhafte Ausgestaltung der erfindungsgemäßen Anordnung zur Reinigung von verschmutztem Schüttgut ergibt sich dadurch, dass eine Vorrichtung zur Entwässerung von bei der Reinigung entstandenem Schlamm vorgesehen ist. Diese Vorrichtung zur Entwässerung von Schlamm kann als sechste Bearbeitungsstufe der Anordnung zugefügt werden. Die in den Zwischenbehälter geleiteten Verunreinigungen, Schwebestoffe und Prozesswasser werden über eine Pumpenstation abgepumpt und einer Schlammpresse zugeführt. In dieser Schlammpresse wird Wasser von den restlichen Inhaltsstoffen, d.h. Verunreinigung und Schwebestoffe, getrennt. Das so gesäuberte Wasser wird der Schüttgutwäsche wieder zur Verfügung gestellt. Der ausgepresste Schlammkuchen kann entsorgt werden.

In einer besonderen Variante ist die erfindungsgemäße Anordnung zur Reinigung von verschmutztem Schüttgut mobil ausgebildet. Kläranlagen benötigen nicht kontinuierlich einer Reinigung von Schüttgut. Die Anschaffungskosten für eine solche Reinigungsanordnung sind gerade für kleine Kläranlagen nicht lohnenswert. Daher dient diese Mobilität der Anordnungen dazu, die Anordnung zur Reinigung von verschmutztem Schüttgut immer an ihren Einsatzort schaffen zu können. Die Kosten für eine solche Anlage können beispielsweise von kleineren Kommunen dann geteilt werden.

Bevorzugterweise ist die Anordnung zur Reinigung von verschmutztem Schüttgut als Einheit ausgebildet. Durch diese Maßnahme lässt sie sich kompakt herstellen und ist damit auch praktisch an jedem Ort einsetzbar.

In einer weiteren bevorzugten Ausbildung der erfindungsgemäßen Anordnung zur Reinigung von verschmutztem Schüttgut ist ein zweiter Wasserhochdruckgenerator für die Siebvorrichtung vorgesehen, welcher das verschmutzte Schüttgut auf dem Schwingsieb mit Wasser unter Hochdruck bestrahlt. Hier wird beispielsweise über Wasserdüsen das verunreinigte Schüttgut bestrahlt. Eine oder mehrere Wasserdüsen können dabei geschwenkt werden. Der Wasserstrahl beschleunigt den Siebvorgang. Die Körner des Schüttguts, die durch die Öffnungen des Siebes passen, werden dort schneller hindurch gespült.

In einer weiteren besonderen Ausgestaltung besteht noch die Möglichkeit, die Öffnungen des Schwingsiebs in ihrer Größe variabel auszubilden. Dadurch kann die Korngröße noch ausgewählt werden, welche durch das Sieb gelangen soll.

Da es sich bei dem verschmutzten Schüttgut oft um erhebliche Mengen handelt, sind die Transportkosten zu der Reinigungsanordnung recht hoch. Um eine vielfältigen Einsatz an verschiedenen Orten zu erreichen, ohne die Anlage für einen Transport zu zerlegen, ist die Anordnung mobil mit einer Transporteinheit ausgebildet. Die Transporteinheit kann bspw. als Tieflader ausgebildet sein worauf die erfindungsgemäße Anordnung weitestgehend fest installiert ist. Auf diese Weise lässt sich die Anordnung schnell überall hin bewegen.

Weitere Ausgestaltungen und Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt in dreidimensionaler Darstellung eine erfindungsgemäße Anordnung zur Reinigung von verschmutztem Schüttgut als schematische Prinzipskizze.
- Fig. 2: zeigt in dreidimensionaler Darstellung eine schematische Prinzipskizze die Zufuhr- und Mischvorrichtung der erfindungsgemäßen Anordnung.
- Fig. 3: zeigt in dreidimensionaler Darstellung eine schematische Prinzipskizze des Aufströmklassierers der erfindungsgemäßen Anordnung.

### Bevorzugtes Ausführungsbeispiel

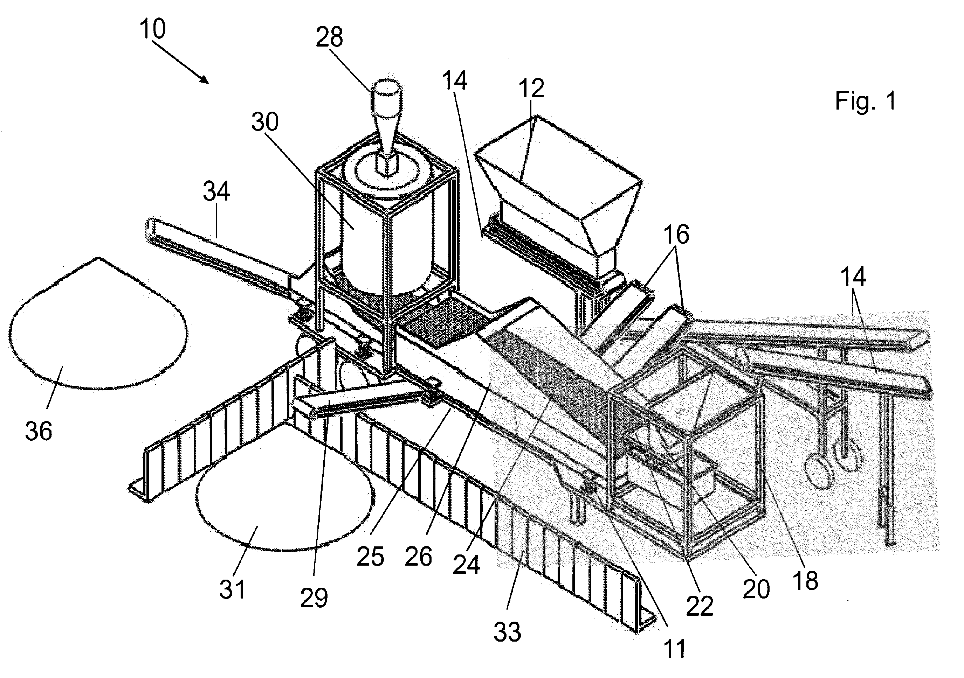

In Fig. 1 wird mit 10 eine erfindungsgemäße Anordnung zur Reinigung von verschmutztem Schüttgut bezeichnet. Die Anordnung befindet sich als einer Einheit auf einem Auflieger 11 für einen nicht dargestellten Sattelschlepper, wodurch die Anordnung mobil wird. Räder 13 des Aufliegers 11 sind ansatzweise zu sehen.

Das verschmutzte Schüttgut wird in einen als Aufnahme ausgebildeten Trichter 12 eingefüllt. Das verschmutzte Schüttgut fällt durch den Trichter 12 auf ein Förderband 14, 16, 22, 29, 34. Das Förderband 14, 16, 22, 29, 34 besteht aus mehreren Komponenten und transportiert das verschmutzte und später gereinigte Schüttgut, sowie die Verunreinigungen zwischen den einzelnen Bearbeitungsstufen. Über die Förderbänder 16 werden Stützkörner auf das Förderband 14 dem verschmutzten Schüttgut zugeführt.

Dieses Gemisch gelangt in eine Mischvorrichtung 18 einer mechanischen Trenneinheit. Ein erster Wasserhochdruckgenerator 20 bestrahlt mit seinem Wasserstrahl das Gemisch aus Stützkörnern und verschmutztem Schüttgut. Durch das beigemengte Stützkorn werden die Verunreinigungen in kleine Bestandteile zerrieben, zerschossen oder aufgelöst.

Das Förderband 22 unterhalb der Mischvorrichtung 18 transportiert das so gelöste Gemisch aus verschmutztem Schüttgut, Stützkörnern und Wasser auf ein Schwingsieb 24 einer Siebvorrichtung 25. Ein zweiter, in dieser Abbildung nicht sichtbarer, Wasserhochdruckgenerator erzeugt einen oder mehrere Wasserstrahlen, mit denen der verschmutzte Schüttgut auf dem Schwingsieb 24 zur Beschleunigung des Siebvorgangs bestrahlt wird. Öffnungen 26 des Schwingsiebs 24 sind in ihrer Größe variabel gehalten, um unterschiedliche Korngrößen abscheiden zu können. Die Größe der Öffnungen 26 wird dabei insbesondere so gewählt, dass die Stützkörner abgetrennt werden und von dem Schwingsieb 24 auf die Förderbänder 16 fallen. Von dort werden sie wieder dem Prozess, d.h. auf das Förderband 14 dem verschmutzten Schüttgut, zur Vermischung zugeführt.

Von dem Schwingsieb 24 wird das verschmutzte Schüttgut nun mit einer nicht dargestellten Pumpenstation einer Zentrifuge 28 zugeführt. In der Zentrifuge 28 wird ein großer Teil des Schüttgutes von Wasser und Verunreinigungen getrennt. Ein anderer Teil des ausgesiebten Materials wird über das Förderband 29 an einem Ort 31 abgelagert. L-förmige Steine 33 dienen zur Abgrenzung und verhindern, dass Verunreinigungen unter die Maschine gelangen.

Das getrennte Wasser mit Anteilen an Verunreinigungen wird in einem nicht dargestellten Zwischenbehälter geleitet. Das Schüttgut mit den Resten an Verunreinigungen fällt in einen unter der Zentrifuge 28 aufgestellten Aufströmklassierer 30. Der Aufströmklassierer 30 trennt durch sein Funktionsprinzip das Schüttgut von Schwebestoffen. Die Schwebestoffe werden hierbei durch Wasser ausgespült und ebenfalls in den Zwischenbehälter geleitet. Das so gereinigte Schüttgut wird aus dem Aufströmklassierer 30 ausgespült und auf ein als Schwingentwässerer ausgebildetes Entwässerungsmittel gegeben. In dem Schwingentwässerer wird dem Schüttgut weiteres Wasser entzogen. Anschließend wird das saubere Schüttgut über das Förderband 34 transportiert und an einem Ort 36 zur weiteren Nutzung angehäuft.

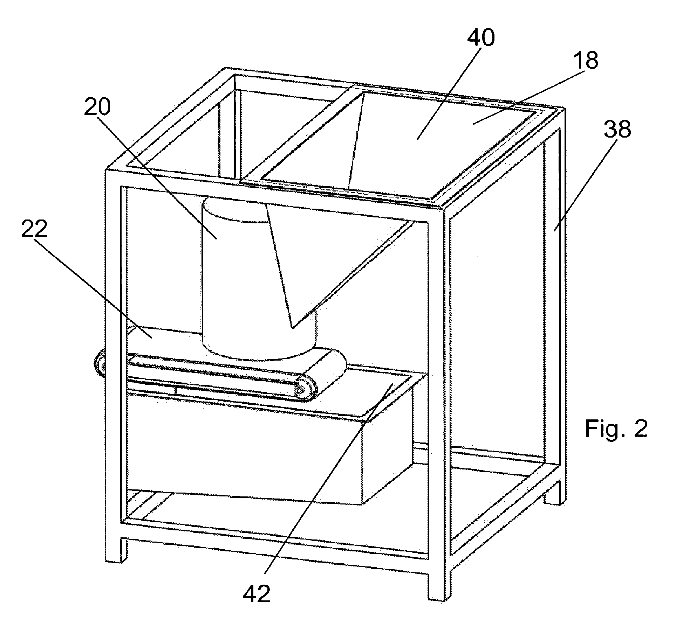

In Figur 2 wird gegenüber Figur 1 die Mischvorrichtung 18 vergrößert als Detailzeichnung mit dem ersten Wasserhochdruckgenerator 20 dargestellt. Die Mischvorrichtung 18 weist in diesem Ausführungsbeispiel ein quaderförmiges Gestell 38 auf, in dem auf der oberen Seite eine als Trichter ausgebildete Zufuhr 40 vorgesehen ist. Das Gemisch aus verschmutztem Schüttgut mit den Stützkörnern wird durch den Wasserstrahl des Wasserhochdruckgenerators 20 zerrieben. Das Gemisch wird so gelöst und fällt auf das Förderband 22, welches das Gemisch schließlich zum Schwingsieb 24 befördert. Unterhalb des Förderbands 22 befindet sich ein Auffangbehälter 42. Der Auffangbehälter 42 fängt Material und Wasser auf, was nicht auf das Förderband 22 gelangt.

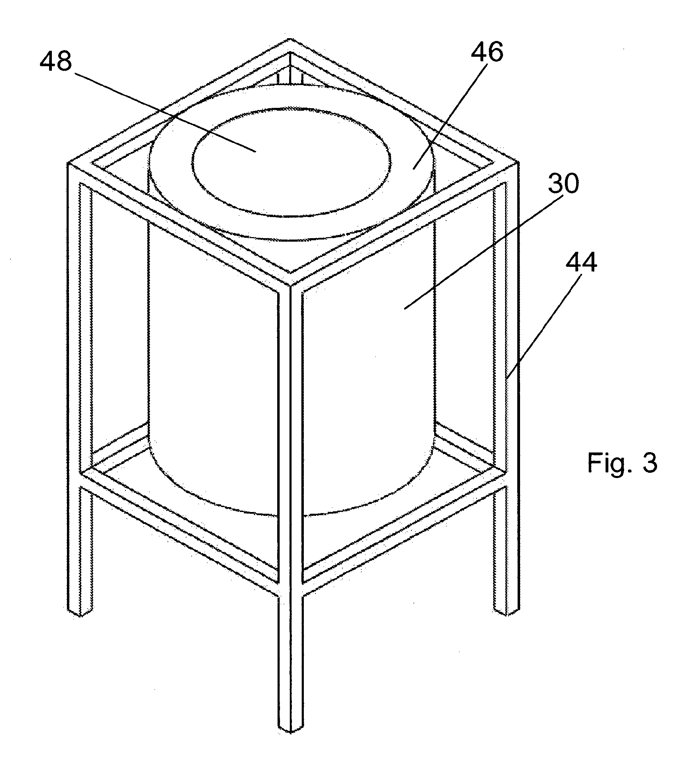

In Figur 3 ist der Aufströmlclassierer 30 als vergrößerte Detailansicht zu sehen. Das verschmutzte Schüttgut wird in denen Aufströmklassierer 30, welcher sich ebenfalls in einem quaderförmigen Gestell 44 befindet, eingeführt. Mit 46 wird der Rand und mit 48 der Innenraum des Aufströmklassierers 30 bezeichnet. Wasser wird von unten in den Innenraum 48 des Aufströmklassierers 30 eingeströmt, so dass die gegenüber dem Schüttgut leichteren Schmutzpartikel nach oben strömen und mit dem Wasser über den oben liegenden Rand 46 weggespült werden.

**Bezugszeichen**

| | |
|---|---|
| 10 | Anordnung (zur Reinigung von verschmutztem Schüttgut) |
| 11 | Auflieger |
| 12 | Trichter |
| 13 | Räder |
| 14 | Förderband |
| 16 | Förderband |
| 18 | Mischvorrichtung |
| 20 | Wasserhochdruckgenerator |
| 22 | Förderband |
| 24 | Schwingsieb |
| 25 | Siebvorrichtung |
| 26 | Öffnungen |
| 28 | Zentrifuge |
| 29 | Förderband |
| 30 | Aufströmklassifizierer |
| 31 | Ort |
| 33 | "L"-Förmige Steine |
| 34 | Förderband |
| 36 | Ort |
| 38 | Quaderförmiges Gestell |
| 40 | Trichter |
| 42 | Auffangbehälter |
| 44 | Quaderförmiges Gestell |
| 46 | Rand des Aufströmklassifizierers |
| 48 | Innenraum des Aufströmklassifizierers |

## Patentansprüche

1. Anordnung (10) zur Reinigung von verschmutztem Schüttgut enthaltend:
a) Eine Aufnahme- und Fördereinrichtung (12, 14, 16, 22, 29, 34) zum Aufnehmen und zum Fördern des verschmutzten Schüttguts innerhalb der Anordnung (10),
b) eine mechanische Trenneinheit zur mechanischen Trennung des Schüttguts und/oder Schlamms mit einer Zufuhr- (40) und Mischvorrichtung (18) zur Zuführung und Durchmischung von Stützkörnern und Wasser zu dem verschmutzten Schüttgut,
c) eine Siebvorrichtung (25) mit einem Schwingsieb (24) zum Abscheiden grobkörniger Bestandteile, insbesondere der Stützkörner,
d) eine Zentrifuge (28) zum Abscheiden von Verunreinigungen vom Schüttgut,
e) einen Aufströmklassierer (30) zum Aufströmen von gelösten Schwebestoffen aus dem Schüttgut,
f) Entwässerungsmittel zur Trennung des gesäuberten Schüttgut und des darin
enthaltenen Wassers,
**gekennzeichnet durch,**
g) einen ersten Wasserhochdruckgenerator (20), welcher das Wasser mit Hochdruck in die Zufuhr- (40) und Mischvorrichtung (18) führt und
h) einen zweiten Wasserhochdruckgenerator für die Siebvorrichtung (25), welcher das verschmutzte Schüttgut auf dem Schwingsieb (24) mit Wasser unter Hochdruck bestrahlt.

2. Anordnung (10) zur Reinigung von verschmutztem Schüttgut nach Anspruch 1, **dadurch gekennzeichnet, dass** eine Vorrichtung zur Entwässerung von bei der Reinigung entstandenem Schlamm vorgesehen ist.

3. Anordnung (10) zur Reinigung von verschmutztem Schüttgut nach einem der Ansprüche 1 bis 2, **dadurch gekennzeichnet, dass** die Anordnung (10) mobil ausgebildet ist.

4. Anordnung (10) zur Reinigung von verschmutztem Schüttgut nach einem der Ansprüche 1 bis 3, **dadurch gekennzeichnet, dass** die Anordnung (10) als Einheit ausgebildet ist.

5. Anordnung (10) zur Reinigung von verschmutztem Schüttgut nach einem der Ansprüche 1 bis 4, **dadurch gekennzeichnet, dass** Öffnungen (26) des Schwingsiebs (24) in ihrer Größe variabel ausgebildet sind.

6. Anordnung (10) zur Reinigung von verschmutztem Schüttgut nach einem der Ansprüche 1 bis 5, **dadurch gekennzeichnet, dass** die Anordnung mobil mit einer Transporteinheit ausgebildet ist.

## Claims

1. An assembly (10) for cleaning soiled bulk goods comprising:
a) a receiving and conveying device (12, 14, 16, 22, 29, 34) for receiving and for conveying the soiled bulk goods within the assembly (10),
b) a mechanical separating unit for the mechanical separation of the bulk goods and / or sludge having a feeding (40) and mixing device (18) for feeding and mixing support grains and water into the soiled bulk goods,
c) a screening device (25) with a vibrating screen (24) for separating coarse-grained components, in particular the support grains,
d) a centrifuge (28) for separating impurities from the bulk goods,
e) an entrainment classifier (30) for entraining loosened suspended solids from the bulk goods,
f) dewatering means for separating the cleaned bulk goods and the water present therein,
**characterized by**
g) a first high-pressure water generator (20) leading water under high pressure into the feeding (40) and mixing device (18), and
h) a second high-pressure water generator for the screening device (25) blasting the soiled bulk goods on the vibrating screen (24) with high-pressure water.

2. An assembly (10) for cleaning soiled bulk goods according to claim 1, **characterized in that** a device is provided for dewatering sludge which occurs during the cleaning.

3. An assembly (10) for cleaning soiled bulk goods according to one of claims 1 to 2, **characterized in that** the assembly (10) is configured to be mobile.

4. An assembly (10) for cleaning soiled bulk goods according to one of claims 1 to 3, **characterized in that** the assembly (10) is configured as a unit.

5. An assembly (10) for cleaning soiled bulk goods according to one of claims 1 to 4, **characterized in that** openings (26) of the vibrating screen (24) are variable in their size.

6. An assembly (10) for cleaning soiled bulk goods according to one of claims 1 to 5, **characterized in that** the assembly is configured to be mobile with a transport unit.

## Revendications

1. Installation (10) destinée à nettoyer des produits en vrac pollués, comprenant :
(a) un dispositif de réception et de transport (12, 14, 16, 22, 29, 34) destiné à réceptionner et transporter les produits en vrac pollués à l'intérieur de l'installation (10),
(b) un module de séparation mécanique destinée à séparer mécaniquement les produits en vrac et/ou les boues à l'aide d'un dispositif d'amenée (40) et de mixage (18) destiné à amener et à mélanger des grains de support et de l'eau aux produits en vrac pollués,
(c) un dispositif de criblage (25) muni d'un crible vibrant (24) destiné à extraire les composants à gros grain, notamment les grains de support,
(d) une centrifugeuse (28) destinée à extraire les polluants contenus dans les produits en vrac,
(e) un classificateur à courant ascendant (30) destiné à extraire à l'aide du courant ascendant les particules en suspension qui se sont détachées des produits en vrac,
(f) des moyens d'assèchement destinés à séparer les produits en vrac nettoyés de leur eau,
**caractérisée par**
(g) un premier générateur d'eau haute pression (20) qui conduit l'eau sous haute pression dans le dispositif d'amenée (40) et de mixage (18) et
(h) un second générateur d'eau haute pression destiné au dispositif de criblage (25) qui arrose d'eau sous haute pression les produits en vrac pollués se trouvant sur le crible vibrant (24).

2. Installation (10) destinée à nettoyer des produits en vrac pollués selon la revendication 1, **caractérisée en ce qu'**il est prévu un dispositif d'assèchement des boues résultant du nettoyage.

3. Installation (10) destinée à nettoyer des produits en vrac pollués selon l'une quelconque des revendications 1 à 2, **caractérisée en ce que** l'installation (10) est conçue sous forme d'installation mobile.

4. Installation (10) destinée à nettoyer des produits en vrac pollués selon l'une quelconque des revendications 1 à 3, **caractérisée en ce que** l'installation (10) est conçue sous forme de module.

5. Installation (10) destinée à nettoyer des produits en vrac pollués selon l'une quelconque des revendications 1 à 4, **caractérisée en ce que** des orifices (26) du crible vibrant (24) sont conçus de sorte à avoir une taille variable.

6. Installation (10) destinée à nettoyer des produits en vrac pollués selon l'une quelconque des revendications 1 à 5, **caractérisée en ce que** l'installation est conçue sous forme d'installation mobile munie d'un module de transport.
